Europäisches Patentamt

European Patent Office

Office européen des brevets

(19)

(11) EP 0 810 417 A2

(12) EUROPEAN PATENT APPLICATION

(43) Date of publication:
03.12.1997 Bulletin 1997/49

(51) Int Cl.$^6$: G01B 11/26

(21) Application number: 97401099.3

(22) Date of filing: 16.05.1997

(84) Designated Contracting States:
DE FR GB

(30) Priority: 27.05.1996 JP 132154/96

(71) Applicants:
• MITSUBISHI PRECISION CO., LTD.
Tokyo 108 (JP)
• Nippon System Integration Co., Ltd.
Tokyo 151 (JP)

(72) Inventors:
• Takagi, Hiroshi, c/o Mitsubishi Precision
kamakura-shi, Kanagawa (JP)
• Hirokawa, Ken
Shibuya-ku, Tokyo (JP)

(74) Representative: Jaunez, Xavier
Cabinet Boettcher
23, rue la Boétie
75008 Paris (FR)

(54) **Relative angle detection apparatus utilizing polarization and virtual reality providing system using the apparatus**

(57) A relative angle detection apparatus requiring only a short time to become active and causing only a small detection error, and a virtual reality providing system adopting the relative angle detection apparatus have been disclosed. The relative angle detection apparatus is a relative angle detection apparatus for detecting a revolution on a plane perpendicular to each axis of an orthogonal coordinate system made by a mounted unit, and includes first to third revolution detecting units each for detecting a revolution about each of the first to third axes of the orthogonal coordinate system serving as axes of revolution. At least one of the first to third revolution detecting units is realized with an optical angle detection unit for detecting an angle of revolution by utilizing polarization. The optical angle detection unit consists of a light source unit separated from the mounted unit, a light-receiving unit united with the mounted unit, and an arithmetic unit. The light source unit irradiates polarized light, of which direction of polarization is confined to a given initial direction, in a direction substantially parallel to an associated axis of revolution. The light-receiving unit includes a polarization filter for receiving light emanating from the light source unit, and a light-receiving device for receiving light emanating from the light source unit and passing through the polarization filter. The arithmetic unit calculates a relative angle of the mounted unit with respect to the given initial direction on the basis of the intensity of a signal output from the light-receiving device.

Fig.1

**Description**

BACKGROUND OF THE INVENTION

1. Field of the Invention

The present invention relates to a relative angle detection apparatus for detecting an angle of revolution of a mounted object, and a virtual reality providing system for changing images to be provided according to a direction in which a user faces and which is detected using the relative angle detection apparatus. More particularly, the present invention relates to a relative angle detection apparatus utilizing polarization, and a virtual reality providing system using the relative angle detection apparatus.

2. Description of the Related Art

In recent years, a virtual reality providing system for giving a feeling of being in a three-dimensional space by providing the eyes with images that are mutually differentiated by a magnitude corresponding to a parallax has been put to practical use and adapted for games or the like. The virtual reality providing system is expected to apply to a wide range of fields. Various proposals have been made for a means for providing eyes with images that are mutually differentiated by a magnitude corresponding to a parallax. The currently most generally adopted means is what is referred to as a head-mounted display to be mounted on the head. The head-mounted display is composed of a pair of displays such as liquid-crystal displays and lenses which are located in front of the eyes, and provides the eyes with independent images. A user mounts the head-mounted display on his/her head, sees images which are differentiated by a magnitude corresponding to a parallax and provided for his/her eyes, and thus feels as if he/she were in a three-dimensional space.

In the case of a game system, a player handles buttons or keys according to a provided three-dimensional space and thus plays a game. The player plays a game with a head-mounted display mounted on his/her head. For providing better virtual reality, when the player changes his/her position or a direction in which he/she faces, images should be changed according to the change. Preferably, both the position and direction should be detected and images should be changed according to the changes in both position and direction. However, since a virtual reality providing system usually provides images depicting a far scene, the direction is especially influential. Herein, therefore, detecting a change in direction in which a player faces, or in other words, a change in direction of the head-mounted display will be discussed.

In a known virtual reality providing system, a gyro-sensor is attached to a head-mounted display in order to detect an angular speed of revolution, and thus detect the direction of the head-mounted display. However, since the gyro-sensor detects an acceleration, integrates the acceleration, and thus detects an angle of revolution, there is a problem that detection precision is low because of accumulated errors. A gyro-sensor enjoying high detection precision is available, but is large in size and in high cost. Besides, there is a problem that since it takes much time for the gyro-sensor to become stable after being activated, a head-mounted display cannot be used immediately after it is mounted. Under the circumstances, a relative angle detection apparatus that is lightweight, low cost, and can detect the orientation of the head-mounted display has been demanded.

SUMMARY OF THE INVENTION

An object of the present invention is to realize a relative angle detection apparatus usable immediately after activated and causing a small detection error by utilizing polarization, and to provide a virtual reality providing system using the relative angle detection apparatus.

A relative angle detection apparatus of the present invention is a relative angle detection apparatus for detecting a revolution on a plane perpendicular to each axis of an orthogonal coordinate system made by a mounted unit, and includes first to third revolution detecting means each for detecting a revolution about each of the first to third axes of the orthogonal coordinate system serving as axes of revolution. To accomplish the foregoing object, the relative angle detection apparatus of the present invention adopts an optical angle detection unit for detecting an angle of revolution by utilizing polarization as at least one of the first to third revolution detecting means. The optical angle detection unit includes a light source unit separated from the mounted unit, a light-receiving unit united with the mounted unit, and an arithmetic means. The light source unit irradiates polarized light, of which the direction of polarization is confined to a given initial direction, in a direction substantially parallel to an associated axis of revolution. The light-receiving unit includes a polarization filter for receiving light irradiated by the light source unit, and a light-receiving device for receiving light emanating from the light source unit and passing through the polarization filter. The arithmetic means calculates a relative angle of the mounted unit with respect to the given initial direction on the basis of the intensity of a signal output from the light-receiving device.

The relative angle detection apparatus of the present invention adopts an optical angle detection unit for detecting an angle of revolution by utilizing polarization. The range of revolution made by a head-mounted display included in a virtual reality providing system is usually limited to a not very large range. For such a limited range of revolution, the optical angle detection unit for detecting an angle of revolution by utilizing polarization causes only a small detection error and is usable immediately after being activated. What is especially critical in the virtual reality providing system is a change in orientation on a horizontal plane. The optical angle detection unit may be used only to detect an angle of such revolution, while a simple accelerometer may be used to detect an angle of revolution about any other axis of revolution.

For nullifying the influence of extraneous disturbance light, preferably, the light source unit should irradiate light whose wavelength falls within a given range, and the light-receiving unit should include a color filter for limiting light incident on the light-receiving device to light whose wavelength falls within a given range. Extraneous disturbing light is thought to have a wide range of wavelengths. With the employment of the color filter, the ratio of extraneous disturbing light to a detection signal decreases greatly. Consequently, the influence of extraneous disturbing light can be minimized.

For nullifying the influence of extraneous disturbing light, the light source unit should preferably irradiate light, which is modulated in intensity, at intervals of a given cycle. An optical angle detection unit should preferably include a bandpass filter for passing only components of an output signal of the light-receiving device having associated frequencies.

When an optical angle detection unit is used to detect a revolution about each of a plurality of axes, one optical angle detection unit may output a detection signal in response to light emanating from a light source included in any other optical angle detection unit for detecting a revolution about any other axis. This results in a detection error. Such light must be eliminated.

In a configuration including a color filter designed to restrict the range of wavelengths of light irradiated by the light source unit and having a transmission range of wavelengths set accordingly, the range of wavelengths is made different among optical angle detection units. Thus, the influence of a light source in any other optical angle detection unit associated with any other axis of revolution can be nullified. In a configuration for modulating in intensity light emanating from the light source unit and extracting only a component of a detection signal having a modulated frequency, the modulated frequency is made different among the optical angle detection units. Thus, the influence of a light source in any other optical angle detection unit associated with a different angle of revolution can be nullified.

Furthermore, a light source unit in each optical angle detection unit irradiates light intermittently and asynchronously with the other optical angle detection apparatuses. An output provided a light-receiving device when an associated light source unit irradiates light is detected. Thus, the influence of a light source in any other optical angle detection unit associated with any other axis of revolution can be nullified.

Using an infrared LED, which is invisible, as a light source in place of a light bulb, the amount of light entering through a gap between a head-mounted display and a patient's face decreases. This results in the improved effect of rehabilitating a patient who is light-sensitive.

In a virtual reality providing system of the present invention, a head-mounted display that is mounted on a user's head and includes an image display means for providing the user's eyes with images is used to differentiate images to be provided for the user's eyes by a magnitude corresponding to a parallax, and thus a three-dimensional image is provided for the user. The foregoing relative angle detection apparatus is used to detect the direction of the head-mounted display. Based on the detected direction of the head-mounted display, images to be provided are changed.

For preventing light other than polarized light emanating from a light source unit from entering a light-receiving unit, a light-interceptive means should preferably be included. For example, a light-interceptive curtain is used as the light-interceptive means.

BRIEF DESCRIPTION OF THE DRAWINGS

The present invention will be more clearly understood from the description as set below with reference being made to the accompanying drawings, wherein:

Fig. 1 is a diagram showing the overall configuration of the first embodiment;
Fig. 2 is a diagram showing the components of a light source unit and detection unit in the first embodiment;
Fig. 3 is a diagram showing the configuration of a signal processor in the first embodiment;
Fig. 4 is a diagram showing the structure of a revolution angle detector utilizing a pendulous servo accelerometer;
Figs. 5A and 5B are diagrams for explaining angle detection utilizing polarization;
Figs. 6A and 6B are diagrams for explaining the arrangement of polarization filters and a range of detection in the first embodiment;
Fig. 7 is a diagram showing the arrangement of light source units and a detection unit in the second embodiment;
Fig. 8 is a diagram for explaining a detection method effective in nullifying the influence of light emanating from other light sources; and
Figs. 9A and 9B are diagrams for explaining a detection method effective in nullifying the influence of light emanating from other light sources.

DESCRIPTION OF THE PREFERRED EMBODIMENTS

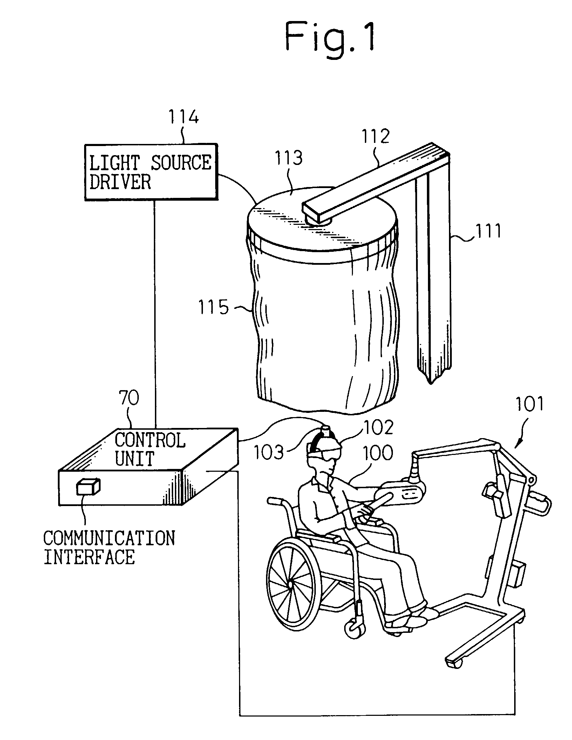

Fig. 1 is a diagram showing the overall configuration of a virtual reality providing system of the first embodiment of the present invention. The virtual reality providing system enables a patient who needs rehabilitation to experience virtual reality, such as, to feel like moving outdoor, causes the patient to handle an instrument accordingly, and thus improves the effect of rehabilitation.

In Fig. 1, there are shown a patient 100 being rehabilitated, a rehabilitation instrument 101, a head-mounted display 102 to be mounted on the patient's head 100, a detection unit 103 included in an optical angle detection unit and attached to the head-mounted display 102, columns 111 and 112, a light source unit 113 included in the optical angle detection unit, a light source driver 114 for driving a light source in the light source unit 113, a light-interceptive curtain 115, and a control unit 70 for controlling the whole system.

The head-mounted display 102 includes display means such as a liquid-crystal display for providing eyes with independent images, and projection lenses. The control unit 70 supplies an image signal to the display means so that images differentiated by a magnitude corresponding to a parallax are provided for eyes. The patient 100 sees images, which are differentiated by a magnitude corresponding to a parallax, with his/her eyes, and feels as if he/she were outdoors. The patient handles the rehabilitation instrument 101 according to an instruction carried by an aural signal or the like and sent from the control unit 70. The control unit 70 detects a handled state, changes images to be provided, and gives a feeling of moving outdoors or the like according to the patient's actions.

The patient 100 changes the orientation of his/her face while handling the rehabilitation instrument 101. For providing better virtual reality, it is necessary to change images to be provided according to a change in orientation of a face. Preferably, changes in orientation of a face in all three axial directions should be detected in order to change images accordingly. Angles of revolution about the axes should preferably be detected accurately. However, what is especially critical to this kind of system is a change in orientation on a horizontal plane. In the first embodiment, therefore, a change in orientation on a horizontal plane, that is, a revolution about a Z axis, which is a vertical direction, serving as an axis of revolution is detected by an optical angle detection unit utilizing polarization. Revolutions about the other two axes each serving as an axis of revolution are detected using a compact and lightweight pendulous servo accelerometer.

The light source unit 113 is located above the position at which the patient 100 handles the rehabilitation instrument 101 by means of the columns 111 and 112. The detection unit 103 is located on the top of the head-mounted display 102 so that the detection unit 103 can receive light emanating from the light source unit 10. The light source driver 114 controls lighting of the light source in the light source unit 113 according to a control signal sent from the control unit 70. The control unit 70 changes images to be provided according to an angle of revolution on a horizontal plane which is detected by the detection unit 103.

The virtual reality providing system and rehabilitation instrument except for the detection unit 103 are realized by a prior art and have no direct relation to the present invention. No more mention will be made of them.

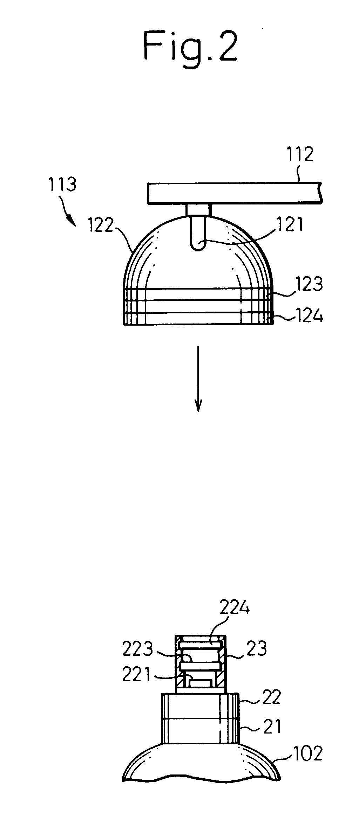

Fig. 2 is a diagram showing the components of the light source unit 113 and detection unit 103 constituting an optical angle detection unit.

As shown in Fig. 2, the light source unit 113 consists of a lamp 121, a reflector 122, a polarization filter 123, and a color filter 124. Light emanating from the lamp 121 is reflected by the reflector 122, and thus recomposed to substantially parallel rays that are oriented downward. The light then passes through the polarization filter 123, and becomes polarized light. After the polarized light passes through the color filter 124, light whose wavelength falls within a given range is produced and irradiated downward. Monochrome polarized light is therefore irradiated downward by the light source unit 113. Light irradiated by the light source unit 113 is used to detect the direction of the head-mounted display 102. Preferably, a patient should be unaware of light irradiation. A filter for passing near-infrared rays is employed herein. Needless to say, an infrared LED can be substituted for the lamp 121.

The detection unit 103 includes an X-axis revolution angle detector 21 for detecting an angle of revolution about an X axis serving as an axis of rotation, a Y-axis revolution angle detector 22 for detecting an angle of revolution about a Y axis serving as an axis of rotation, and a light-receiving unit 23 for detecting an angle of revolution about an Z axis serving as an axis of rotation. The light-receiving unit 23 includes a color filter 224 having the same transmission characteristic as the color filter 124, a polarization filter 223, and a light-receiving device 221.

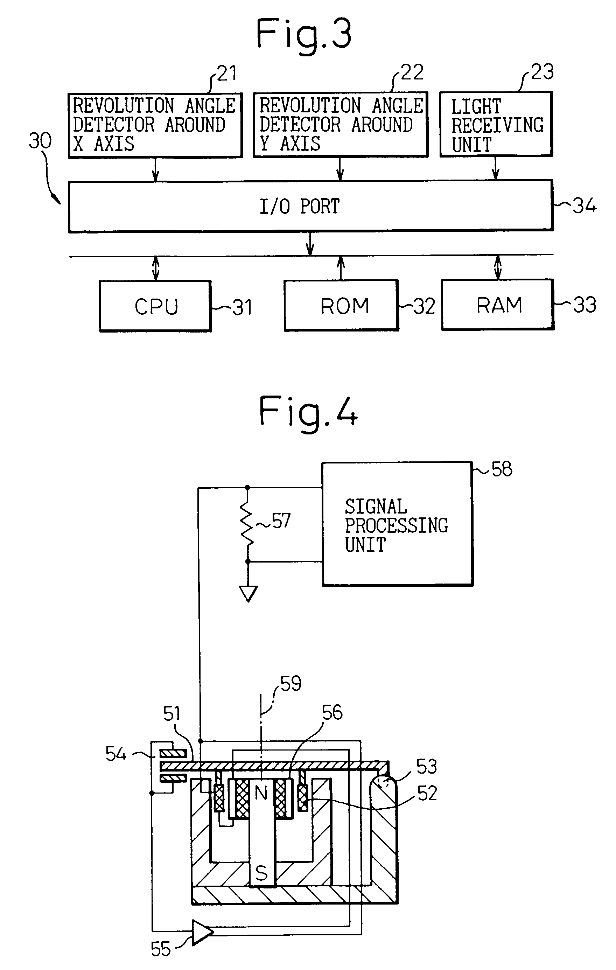

Fig. 3 is a diagram showing a data processor in the detection unit 103. The data processor includes a CPU 31, a ROM 32, a RAM 33, and an I/O port 34 which constitute a computer. An angle of revolution about the X, Y, or Z axis detected by the X-axis revolution angle detector 21, Y-axis revolution angle detector 22, or light-receiving unit 23 is converted into a digital signal by an A/D converter that is not shown, and then fetched into the computer.

The X-axis revolution angle detector 21 and Y-axis revolution angle detector 22 each use a pendulous servo accelerometer to detect an angle of revolution. The structure of the pendulous servo accelerometer is shown in Fig. 4.

What is shown in Fig. 4 is referred to as a force-balance type accelerometer. A cantilever 51 supported by a pivot 53 is placed perpendicularly to a direction 59 in which an angular speed is detected. With acceleration, the other end of the cantilever 51 is displaced. A pick-off 54 detects the displacement and outputs an electric wave to a servo amplifier 55. The servo amplifier 55 feeds back a current proportional to the amplitude of the wave to an electromagnet formed with a proof-mass 52 and auxiliary ring 56. This causes the cantilever 51 to be accelerated in an opposite direction and stabilized. The feedback current is proportional to an acceleration. The acceleration is therefore detected by detecting the feedback current. A speed can be detected by integrating the acceleration relative to a time, while an angle of revolution can be detected by integrating the speed relative to a time. This processing is carried out by a signal processing unit 58. Consequently, an angle of revolution is output.

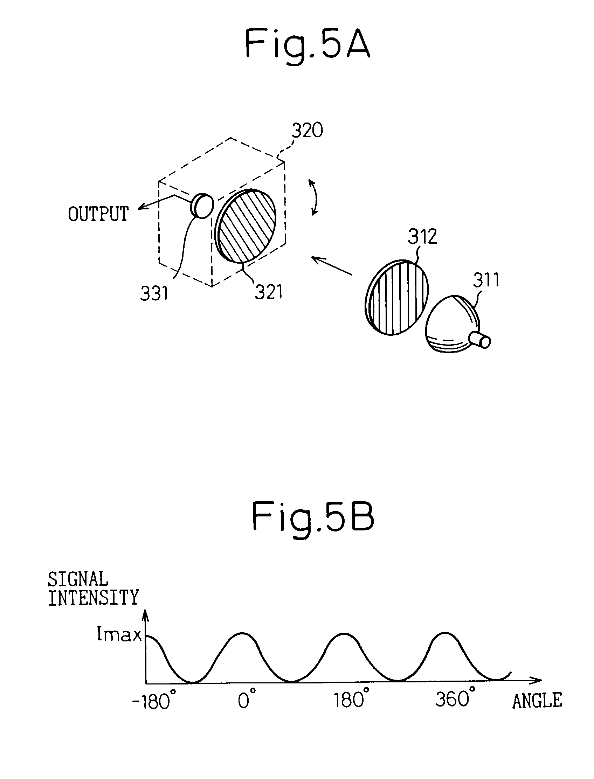

An optical angle detection unit composed of the light source unit 113 and light-receiving unit 23 has the arrangement shown in Fig. 2. The principles of detection will be described with reference to Figs. 5A and 5B.

In Fig. 5A, there are shown a light source 311, a polarization filter 312, a polarization filter 321, and a light-receiving device 331. The polarization filter 321 and light-receiving device 331 are incorporated unitedly in a light-receiving unit 320. The light-receiving unit 320 is attached to an object whose angle of revolution is to be detected. The light source 311 and polarization filter 312 are stationary and irradiate polarized light in a direction of an arrow. The direction of polarization of irradiated light is therefore fixed. The direction of polarization is defined with any angle on a plane perpendicular to a direction of irradiation. The angle defines a reference direction. The polarization filter 321 and light-receiving device 331 are arranged to receive the polarized light. Light passing through the polarization filter 321 has the largest intensity when the directions of polarization of light passing through the polarization filters 312 and 321 become coincident with each other. When the directions of polarization differ from each other by 90°, the light has the smallest intensity. Little light therefore enters the light-receiving device 331. When the polarization filter 321 is rotated, an output of the light-receiving device 331 varies as shown in Fig. 5B. That is to say, the output of the light-receiving device 331 varies as a function $Imax(1+\cos 2\theta)/2$ where $\theta$ denotes an angle of the direction of polarization of light passing through the polarization filter 321 with respect to the direction of polarization of light passing through the polarization filter 312. When the intensity of light output from the light source 311 is constant, the maximum intensity Imax of an output provided by the light-receiving device 331 when the $\theta$ value is 0° and 180° is constant. Assuming that a detected signal intensity is I, the angle $\theta$ is expressed as follows:

$$\theta = arc\ cos(2I\ /\ Imax - 1)\ /\ 2 \qquad (1)$$

This means that the angle $\theta$ can be calculated by detecting the intensity of an output signal of the light-receiving device 331.

As shown in Fig. 5B, the output signal varies at intervals of a cycle of 180° and is symmetrical with respect to 0°. An angle that can be determined uniquely therefore ranges from 0° to 90°. For example, the signal has the same intensity at angles - 45° and + 45° and the signal has the same intensity at angles + 45° and + 135°. It is impossible to tell which of the angles is correct.

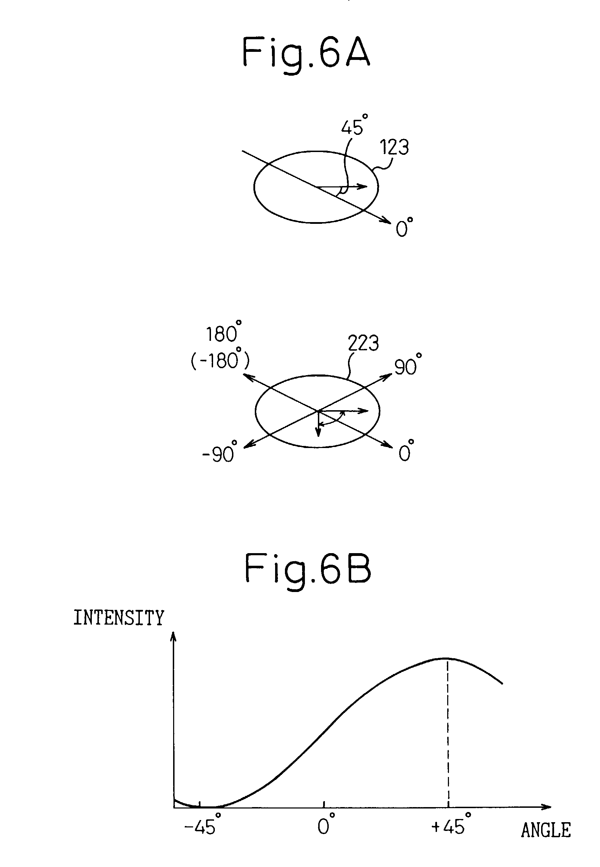

In the first embodiment, therefore, the polarization filter 123 in the light source unit and the polarization filter 223 in the light-receiving unit 23 are arranged as shown in Fig. 6. A revolution about the Z axis serving as an axis of revolution is detected in a range from - 45° to + 45°. As long as the virtual reality providing system is designed for use of rehabilitation, the patient 100 will not change his/her orientation very greatly. No problem occurs even when a range of detection is confined to the range from - 45° to + 45°.

As shown in Fig. 6A, assuming that the direction of a center of a range in which the patient 100 changes his/her orientation is defined with 0°, when the range of detection is set to + 45°, the direction of polarization of light passing through the polarization filter 123 in the light source unit is defined with + 45°, and the polarization filter in the light-receiving unit 23 is placed so that the direction of polarization of light passing through the polarization filter will be defined with 0° when the patient 100 faces in a direction defined with 0°. Consequently, as shown in Fig. 6B, when the patient faces in a direction defined with + 45°, the directions of polarization of light passing through the polarization filter 123 in the light source unit and the polarization filter in the light-receiving unit 23 respectively coincide with each other, and the output of the light-receiving device 221 has a maximum intensity. When the patient faces in a direction defined as - 45°, the directions of polarization of light passing through the polarization filter 123 in the light source unit and the polarization filter in the light-receiving unit 23 respectively become orthogonal to each other, the output of the light-receiving device 221 has a minimum intensity. Thus, any angles in the range of ± 45° are not associated with the same value. Assuming that the angle of revolution varies within the range ± 45°, the maximum intensity is Imax, and a detected signal intensity is I, the angle $\theta$ can be calculated according to the following expression (2):

$$\theta = arc\ sin(2I\ /\ Imax - 1)\ /\ 2 \qquad (2)$$

In the configuration shown in Fig. 1, the light-interceptive curtain 115 is included for minimizing the influence of extraneous disturbance light. The light-interceptive curtain can actually minimize the influence of extraneous disturbance light. When the light-interceptive curtain 115 cannot be made very long or cannot be used in terms of the handling efficiency of the system, the influence of extraneous disturbance light increases. Extraneous disturbance light is light entering the detection unit 103 from the surroundings of the patient 100 in the state shown in Fig. 1, and can be thought to be constant for a prolonged period of time. When the light source unit 113 is lit with an alternating current, an output of the light-receiving device 221 varies at intervals of a cycle during which the light source unit 113 is lit with an alternating current. However, an extraneous disturbance light component in an output acts as a bias. The intensity of the whole output increases by that of the bias.

In the first embodiment, the color filters 124 and 224 are included in both the light source unit and light-receiving unit so that light incident on the light-receiving device 221 is composed substantially of rays emanating from the light source unit. Extraneous disturbance light is thought to have a wide range of wavelengths. The employment of the color filters greatly decreases the ratio of extraneous disturbance light to a detection signal. Consequently, the influence of extraneous disturbance light can be minimized.

In the first embodiment, other various measures are also taken to minimize the influence of extraneous disturbance light. The measures will be described in conjunction with the second embodiment.

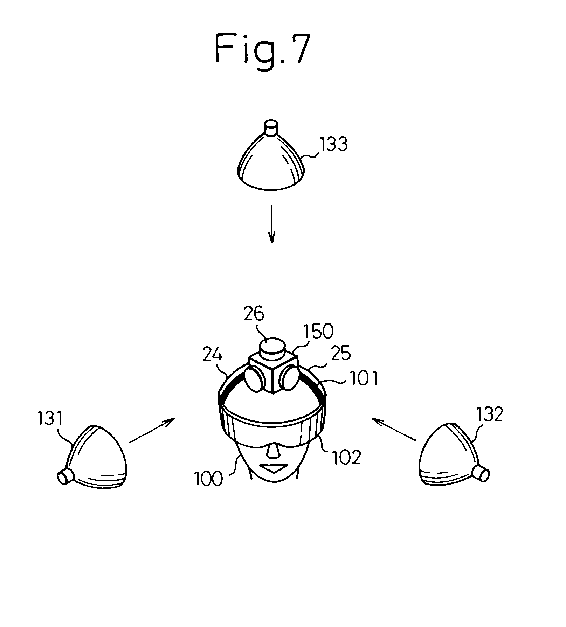

Fig. 7 is a diagram showing the arrangement of a light source unit 113 and detection unit 103 constituting an optical angle detection unit in accordance with the second embodiment. The overall configuration of a system of the second embodiment is identical to that of the first embodiment shown in Fig. 1.

In Fig. 7, an angle of revolution about an X axis serving as an axis of rotation is detected by an X light source unit 131 and X light-receiving unit 24, an angle of revolution about a Y axis serving as an axis of rotation is detected by a Y light source unit 132 and Y light-receiving unit 25, and an angle of revolution about a Z axis serving as an axis of rotation is detected by a Z light source unit 133 and Z light-receiving unit 26. The X light source unit 131, Y light source unit 132, and Z light source unit 133 each have the same components of the light source unit 113 shown in Fig. 2. The X light-receiving unit 24, Y light-receiving unit 25, and Z light-receiving unit 26 each has the same components as those of the light-receiving unit 23. The X light-receiving unit 24, Y light-receiving unit 25, and Z light-receiving unit 26 are incorporated in a unit 150 united with a head-mounted display 102.

In the second embodiment, an angle of revolution about each of three axes serving as axes of rotation is detected by the optical angle detection unit utilizing polarization which has been described in conjunction with the first embodiment. Detecting an angle of revolution about each axis is identical to detection of an angle of revolution about the Z axis serving as an axis of rotation which has been described in conjunction with the first embodiment. Points specific to the detection of an angle of revolution about each of three axes using the optical angle detection unit will be described below.

When a patient changes his/her orientation to some extent, one light-receiving unit not only receives polarized light from the associated light source unit but also receive light emanating from the other light source units. With reception of the light emanating from the other light source units, a detection signal does not vary as shown in Fig. 6B responsively to a revolution. This results in a detection error. As long as an angle of revolution with respect to 0° is small, the error is negligible. When the angle of revolution becomes equal to or larger than a certain angle, the error poses a problem. For preventing occurrence of such a problem, the second embodiment takes various measures.

As the first measure, ranges of wavelengths transmitted by the color filters 124 and 224 are made different among the axes. Light emanating from not-associated light source units is therefore eliminated.

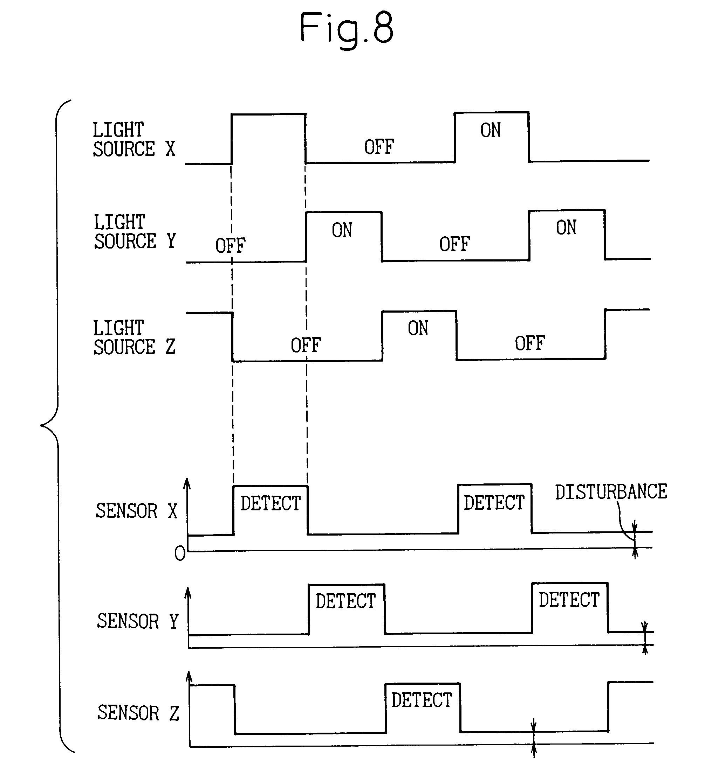

As the second measure, as shown in Fig. 8, the lamps included in the X light source unit 131, Y light source unit 132, and Z light source unit 133 are made unlit intermittently and are not lit simultaneously. The X light-receiving unit 24, Y light-receiving unit 25, and Z light-receiving unit 26 each calculate an angle of revolution about an associated axis serving as an axis of revolution on the basis of an output signal provided by the light-receiving device when the associated light source unit is lit. Thus, light emanating from the other light source units is eliminated.

When extraneous disturbance light is present as shown in Fig. 8, an output signal contains a substantially constant direct-current component. This component is an extraneous disturbance light component. An output signal provided by each light-receiving device when the associated light source unit is lit is detected and subtracted from an output signal provided when the associated light source unit is unlit, whereby the extraneous disturbance light component can be eliminated. This is effective even when only one optical angle detection unit is used as it is in the first embodiment. In short, a light source is lit intermittently, and detection is synchronized with the lighting. Eventually, the extraneous disturbance light component can be eliminated.

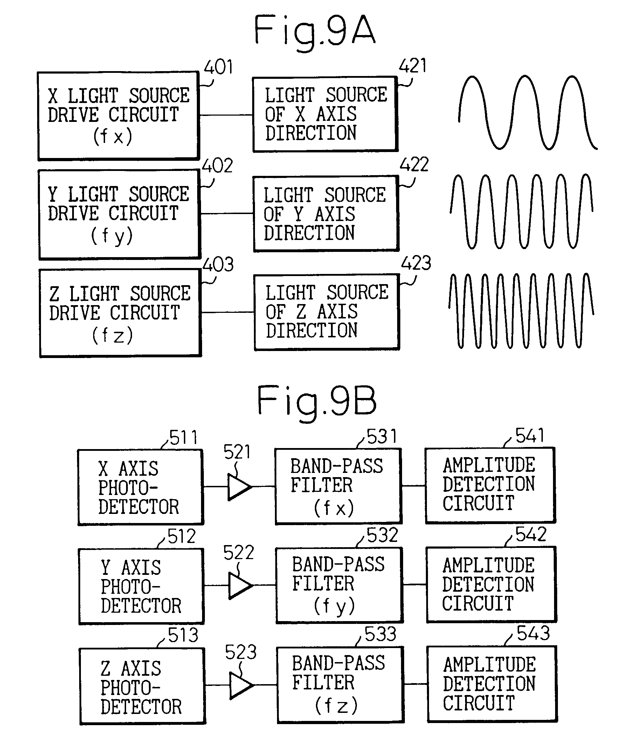

As the third measure, as shown in FIg. 9A, light emanating from the lamps in the X disturbance light source unit 131, Y light source unit 132, and Z light source unit 133 is modulated in intensity at intervals of different cycles fx, fy, and fz. The X light-receiving unit 24 has, as shown in Fig. 9B, a bandpass filter 531 treating a frequency fx as a center frequency installed on a stage succeeding an amplifier 521 for amplifying an output signal of an X-axis photodetector 511. An amplitude detection circuit 541 detects the output of the bandpass filter 531. Likewise, the Y light-receiving unit 25 and Z light-receiving unit 26 include bandpass filters 532 and 533 treating frequencies fy and fz as center frequencies thereof, and amplitude detection circuits 542 and 543. Owing to this configuration, even if one light-receiving unit receives light from not-associated light source units, since the bandpass filter 531, 532, or 533 eliminates the light, the light will not affect detection of an angle of revolution about an associated axis.

The third measure is effective in eliminating extraneous disturbance light in the system of the first embodiment.

As described so far, according to the present invention, a relative angle detection apparatus usable immediately after being activated and causing only a small detection error can be realized. Using the relative angle detection apparatus, a virtual reality providing system capable of readily providing more realistic images in harmony with a user's motion can be provided.

## Claims

1. A relative angle detection apparatus for detecting an angle of revolution about each of axes of an orthogonal coordinate system serving as axes of rotation made by a mounted unit, comprising:

   first to third revolution detecting means each for detecting a revolution on a plane perpendicular to each of the first to third axes of the orthogonal coordinate system,
   wherein at least one of said first to third revolution detecting means is an optical angle detection unit including:
   a light source unit (113), separated from said unit, for irradiating polarized light, of which direction of polarization is confined to a given initial direction, in a direction substantially parallel to an associated axis of revolution;
   a light-receiving unit (23) including a polarization filter (223) for receiving light emanating from said light source unit (113), and a light-receiving device (221) for receiving light emanating from said light source unit (113) and passing through said polarization filter(223), and being united with said unit; and
   an arithmetic means (3) for calculating a relative angle of said unit with respect to the given initial direction on the basis of the intensity of a signal output from said light-receiving device (221).

2. A relative angle detection apparatus according to claim 1, wherein said light source unit (113) irradiates light whose wavelength falls within a given range, and said light-receiving unit (23) includes a color filter (224) for limiting light incident on said light-receiving device (221) to light whose wavelength falls within the given range.

3. A relative angle detection apparatus according to claim 1, wherein when a plurality of means among said first to third revolution detecting means are optical angle detection units, said light source unit (113) in each optical angle detection unit irradiates light whose wavelength falls within a different range, and said color filter (224) in each optical angle detection unit handles a different range of wavelengths.

4. A relative angle detection apparatus according to claim 1, wherein said light source unit (113) irradiates light that is modulated in intensity at intervals of a given cycle, and said optical angle detection unit includes a bandpass filter for passing only components of an output signal of said light-receiving device (221) having associated frequencies.

5. A relative angle detection apparatus according to claim 4, wherein when a plurality of means among said first to third revolution detecting means are optical angle detection units, light emanating from said light source unit (113) in each optical angle detection unit is modulated in intensity at intervals of a different cycle, and said bandpass filter in each optical angle detection unit passes signal components whose frequencies fall within a different band.

6. A relative angle detection apparatus according to claim 1, wherein when a plurality of means among said first to third revolution detecting means are optical angle detection units, said light source unit (113) in each optical angle detection unit irradiates light intermittently and asynchronously with the other optical angle detection units, and said arithmetic means (3) in each optical angle detection unit calculates a relative angle by detecting an output provided by said light-receiving device (221) when an associated light source unit (113) irradiates light.

7. A relative angle detection apparatus according to any of claims 4 to 6, wherein an infrared LED is used as a light source (121).

8. A virtual reality providing system, comprising:

   a head-mounted display (102) being mounted on a head of a user (100) and including an image display means for providing the eyes of the user (100) with images; and
   a control unit (70) for producing images to be displayed on said image display means of said head-mounted display (102),
   wherein images to be provided for the eyes of the user (100) are differentiated by a magnitude corresponding to a parallax, and thus a three-dimensional image is provided for the user,
   said virtual reality providing system further comprising a relative angle detection apparatus set forth in any of claims 1 to 4,
   wherein said control unit (70) changes images to be displayed on said image display means according to the relative angle of said head-mounted display (102) which is detected by said relative angle detection apparatus.

9. A virtual reality providing system according to claim 8, further comprising a light-interceptive means for minimizing incidence of light other than polarized light emanating from said light source unit (113) on said light- receiving unit (23).

10. A virtual reality providing system according to claim 9, wherein said light-interceptive means is a light-interceptive curtain (115) hung on said light source unit (113) so that said light-interceptive curtain can surround the user's range of motions.

# Fig.1

LIGHT SOURCE DRIVER

CONTROL UNIT

COMMUNICATION INTERFACE

# Fig.2

# Fig.3

| REVOLUTION ANGLE DETECTOR AROUND X AXIS 21 | REVOLUTION ANGLE DETECTOR AROUND Y AXIS 22 | LIGHT RECEIVING UNIT 23 |

30

I/O PORT 34

| CPU 31 | ROM 32 | RAM 33 |

# Fig.4

SIGNAL PROCESSING UNIT 58

57

59

51 56

54 53

52

N

S

55

# Fig.5A

# Fig.5B

# Fig.6A

45°

123

0°

180°
(-180°)

223

90°

-90°

0°

# Fig.6B

INTENSITY

-45°          0°          +45°          ANGLE

# Fig.7

# Fig.8

# Fig.9A

| | | |
|---|---|---|
| X LIGHT SOURCE DRIVE CIRCUIT (f x) ⌐401 | LIGHT SOURCE OF X AXIS DIRECTION ⌐421 | |
| Y LIGHT SOURCE DRIVE CIRCUIT (f y) ⌐402 | LIGHT SOURCE OF Y AXIS DIRECTION ⌐422 | |
| Z LIGHT SOURCE DRIVE CIRCUIT (f z) ⌐403 | LIGHT SOURCE OF Z AXIS DIRECTION ⌐423 | |

# Fig.9B

| | | | |
|---|---|---|---|
| X AXIS PHOTO-DETECTOR ⌐511 | 521 | BAND-PASS FILTER (f x) ⌐531 | AMPLITUDE DETECTION CIRCUIT ⌐541 |
| Y AXIS PHOTO-DETECTOR ⌐512 | 522 | BAND-PASS FILTER (f y) ⌐532 | AMPLITUDE DETECTION CIRCUIT ⌐542 |
| Z AXIS PHOTO-DETECTOR ⌐513 | 523 | BAND-PASS FILTER (f z) ⌐533 | AMPLITUDE DETECTION CIRCUIT ⌐543 |